# EUROPÄISCHE PATENTANMELDUNG

(11) **EP 2 955 553 A2**
(43) Veröffentlichungstag der Anmeldung: **16.12.2015**
(21) Anmeldenummer: 15168499.0
(22) Anmeldetag: 20.05.2015
(51) Int. Cl.: G02B 6/00, F21V 8/00, G02B 5/02

(54) **LICHTSTREUENDES SCHICHTSYSTEM, VERFAHREN ZU SEINER HERSTELLUNG UND VERWENDUNG DES SCHICHTSYSTEMS**

(30) Priorität: 20.05.2014 DE 102014107099
(71) Anmelder: Fraunhofer-Gesellschaft zur Förderung der angewandten Forschung e.V., 80686 München (DE)
(72) Erfinder: Löbmann, Peer, 97218 Gerbrunn (DE); Hegmann, Jan, 97204 Höchberg (DE); Domann, Gerhard, 97204 Höchberg (DE); Collin, Daniela, 97440 Werneck (DE)
(74) Vertreter: Olgemöller, Luitgard Maria

(57) **Zusammenfassung**

Die Erfindung betrifft ein lichtstreuendes Schichtsystem, umfassend ein Substrat sowie eine auf dem Substrat befindliche Schicht, die zu mehr als 95 Gew.-% aus anorganischem Material besteht und die folgenden Komponenten aufweist:
- eine erste Art von anorganischen Partikeln mit einem Durchmesser im Bereich von 100 nm bis 1,2 µm,
- eine zweite Art von Partikeln mit einem Durchmesser im Bereich von 2 bis 25 nm, bei denen es sich um oxidische Partikel handelt, erhalten durch hydrolytische Kondensation einer gelösten Vorstufe,
wobei eine der beiden Partikel-Arten einen Brechungsindex aufweist, der sich bei einer definierten Wellenlänge, vorzugsweise der Wellenlänge der He-Spektrallinie (0,5865 µm), um mindestens 0,17, vorzugsweise um mindestens 0,25 und besonders bevorzugt um mindestens 1,0 vom Brechungsindex der anderen Art bei derselben Wellenlänge unterscheidet.

Die Erfindung betrifft auch ein Verfahren zur Herstellung dieses Schichtsystems sowie dessen Verwendung in Solarzellen, LEDs, OLEDs oder Glaselementen, die für bauliche Zwecke eingesetzt werden sollen, oder zu deren Herstellung.

## Beschreibung

Die vorliegende Erfindung betrifft ein optisch streuendes (vorzugsweise sichtbares Licht streuendes) Schichtsystem, mit dessen Hilfe der Weg des Lichts sowohl bei der Einstrahlung von Licht als auch bei der Abstrahlung verlängert werden kann. Das Schichtsystem ist nasschemisch applizierbar und kann bei der Herstellung vieler verschiedener Einrichtungen eingesetzt werden, z.B. bei der Herstellung von (Dünnschicht-)Solarzellen, LEDs, OLEDs oder Architekturglaselementen. Derartige Vorrichtungen/Elemente werden nachstehend unter dem Ausdruck "optisch wirksame Struktur" zusammengefasst.

Sowohl Lichtein- als auch Lichtauskopplung sind technisch gleichermaßen von Bedeutung: In der Dünnschichtphotovoltaik gilt es, den Lichtweg der einfallenden Strahlung im Absorbermaterial zu verlängern, um den Wirkungsgrad der Solarzellen zu verbessern. In organischen Leuchtdioden (OLEDs) wird zunächst nur ein Teil des erzeugten Lichtes abgegeben, Verluste entstehen durch mangelnde Auskopplung der Strahlung aus dem Leuchtmittel. Für beide Problemstellungen eignen sich optisch streuende Schichten.

Es gibt eine Anzahl von Vorschlägen für die verschiedensten Vorrichtungen, die Weglänge des Lichts zu vergrößern. Für Si-Dünnschichtsolarzellen in einer Superstratanordnung werden gesputterte AZO-Schichten als Frontkontakt verwendet, die durch einen nasschemischen Ätzschritt oberflächenstrukturiert werden können, siehe J.Hüpkes, J.Owen, S.Pust, E.Bunte "Chemical etching of zink oxide for thin film silicon solar cells" Chem.Phys.Chem. 13 (2012) 66-73. Lichtstreuung an diesen rauen Oberflächen führt zu einer verbesserten Lichtabsorption in den folgenden Si-Absorberschichten. Dazu muss jedoch die vakuumbasierte Prozesskette der AZO-Deposition (Sputtern) und der Absorberpräparation (PECVD) durch das Ätzen bei Atmosphärendruck unterbrochen werden. Diese Unterbrechung kann durch die Verwendung aufgerauter Glassubstrate vermieden werden: Oberflächentopographien lassen sich durch Nanolmprint-Lithographie (NIL) (siehe Mathieu Boccard et al., "Multiscale Transparent Electrode Architecture for Efficient Light Management and Carrier Collection in Solar Cells", Nano Lett. 2012, 12, 1344-1348; Corsin Battaglia et al., "Efficient light management scheme for thin film silicon solar cells via transparent random nanostructures fabricated by nanoimprinting", Applied Physics Letters 96, 213504 (2010); Jordi Escarre et al., "High fidelity transfer of nanometric random textures by UV embossing for thin film solar cells applications", Solar Energy Materials & Solar Cells 95 (2011) 881-886; Andrea Feltrin et al., "Advanced light trapping designs for high efficiency thin film silicon solarcells", Solar Energy Materials & Solar Cells119(2013)219-227) oder partielles Ätzen einer Si₃N₄-Barriereschicht, siehe Min-An Tsai et al.," Embedded biomimetic nanostructures for enhanced optical absorption in thin-film solar cells", OPTICS EXPRESS 19, No. S4 A757-A762, erzeugen. Beide Ansätze sind aber technologisch aufwendig. Bei allen bisher aufgeführten Verfahren ist außerdem sicherzustellen, dass sich die erzeugten Oberflächenreliefs sich nicht nachteilig auf die Deposition der nachfolgenden Funktionsschichten auswirken. Nachstehend werden bisherige Lösungsansätze für eine Reihe von photovoltaischen Systemen und von Leuchtmitteln skizziert.

Für das Lichtmanagement in substratbasierten Dünnschichtsolarzellen gibt es eine Vielzahl von Ansätzen: Es werden geprägte PC-Substrate (de Jong, M. M. et al., "Scattering, diffraction, and geometric light trapping in thin film amorphous silionc solar cells on plastic substrates, MRS Onlie Proceedings Library (2012), 1426 (Amorphous and Polycrystalline Thin-Film Silicon Science and Technology) (ohne Seitenzahlangabe), Oberflächenstrukturierungen durch NIL (Corsin Battaglia et al., "Efficient light management scheme for thin film silicon solar cells via transparent random nanostructures fabricated by nanoimprinting", Applied Physics Letters 96, 213504 (2010)) oder strukturierte Kieselglasoberflächen (Zhu et al., "Nanodome Solar Cells with Efficient Light Management and Self-Cleaning", Nano Lett. 10, 1979-1984(2010)) verwendet. Der hiermit verbundene technologische Aufwand ist nicht unerheblich. Werden Reliefs durch die Strukturierung von Photoresistschichten (Bas B. Van Aken et al., "Inline deposited thin-film silicon solar cells on imprinted foil using linear PECVD sources", Journal of Non-Crystalline Solids 358 (2012) 2268-2271) erzeugt, ist die thermische Belastbarkeit beim Prozessieren des folgenden Schichtaufbaus stark eingeschränkt. Auch bei den beschriebenen Aufrauhungen der Substrate ist auszuschließen, dass sich die Performance der folgenden Funktionsschichten negativ verändert. Aus diesem Grund wurden aufwendige Verfahren zur Lichtstreuung an glatten AZO-aSi Nanostrukturen entwickelt, siehe z.B. Hitoshi Sai et al., "Flattened Light-Scattering Substrate and Its Application to Thin-Film Silicon Solar Cells, Japanese Journal of Applied Physics 51 (2012) 10NB07 und Söderström et al. "Experimental study of flat light-scattering substrates in thin-film silicon solar cells" Solar Energy Materials & Solar Cells 101 (2012) 193-199.

Es existieren theoretische Studien zur Lichtstreuung durch Partikel in einem ITO Frontkontakt (Yang et al. "Efficient optical absorption in thin-film solar cells" OPTICS EXPRESS 12 September 2011 / Vol. 19, No. S5/A1166); bei Joondong Kim et al., "Effective light management of three-dimensionally patterned transparent conductive oxide layers, Applied Physics Letters 101, 143904 (2012) wird der ITO Frontkontakt in einem mehrstufigen Verfahren photolithographisch strukturiert. Yu.A. Akimov et al. beschreiben in "Enhancement of optical absorption in thin-film solar cells through the excitation of higher-order nanoparticle plasmon modes in OPTICS EXPRESS 17(12) 10195 die Wirkung von Ag-Nanopartikeln auf einem ITO Frontkontakt theoretisch. Im voranstehend genannten Artikel von Joondong Kim et al. werden strukturierte TiO₂-Schichten zwischen den metallischen Grids im Frontkontakt von GaAs-Zellen zur Lichtstreuung und als Antireflexschicht eingesetzt. Photonische Ag-Strukturen im Rückkontakt von aSi-Zellen werden von Yu.A. Akimov et al. im oben erwähnten Artikel beschrieben. Gemäß dem oben zitierten Artikel von Andrea Feltrin et al. setzen die Autoren metallische Nanopartikel zwischen der aSi und µcsi Absorberschicht ein.

Die Lichtemission von OLEDs vollzieht sich meist durch leitfähig beschichtete (Frontkontakt) Gläser, auf denen die OLED-Stapel mit einem metallischen Rückkontakt aufgebracht sind. Die Gläser sind somit bezüglich der Diode Superstrate. Su Seong Jeong und Jae-Hyeon Ko behandeln in "Optical Simulation Study on the Effect of Diffusing Substrate and Pillow Lenses on the Outcoupling Efficiency of Organic Light Emitting Diodes", Journal of the Optical Society of Korea 17(3), 269-274 (2013) die Wirkung streuender Superstrate theoretisch. Auf dem Glas können Streufolien (Loebl et al. "Hybrid white OLEDs for general lighting" From Digest of Technical Papers - Society for Information Display International Symposium (2011), 42(Bk. 2), 979-982.), organische Nanopartikel (Shuming Chen et al., "One-step fabrication of organic nanoparticles as scattering media for extracting substrate waveguide light from organic light-emitting diodes", J. Mater. Chem., 2012, 22, 13386) oder eingravierte Strukturen zur Lichtstreuung verwendet werden.

Die meisten Arbeiten zur Lichtauskopplung aus OLEDs adressieren streuende Strukturen zwischen den Gläsern und dem (ITO) Frontkontakt, wobei in der Patentliteratur meist nur auf die grundsätzliche Wirkung stochastischer (KR 2013 108 208 A) oder periodischer (CN 10 3332031 A) Strukturen eingegangen wird. In den Patentanmeldungen mit den Veröffentlichungs-Nrn. WO 2009/011961 A2, US 2012/02344 60 A1 und EP 2 645 442 A2 wird die Wichtigkeit der Planarisierung rauer Streuschichten für die Funktionsfähigkeit der folgenden OLED thematisiert. Gemäß EP 2 645 442 A2 können auch lichtstreuende Partikel, darunter TiO₂-Partikel, in die Schichten eingearbeitet werden, mit denen die rauen Schichten planarisiert werden. Gemäß US 2010/0150513 A1 kann ein Lichtextraktionsfilm vorhanden sein, der eine "low index" Struktur und eine "high index" Struktur umfasst. Dabei kann die "low index" Struktur diskrete Nanopartikel aus organischen oder anderen Materialien aufweisen. In einer spezifischen Ausführungsform sind größere (440 nm) und kleinere (5 nm) SiO₂-Partikel in dieser Struktur vorhanden, wobei die kleineren Teilchen die gleichmäßige Verteilung der größeren Teilchen in der Matrix stark verbessern. In den Artikeln "Using an embedded nanocomposite scattering film for increasing out-coupling of white phosphorescent organic light-emitting devices" , Proceedings of SPIE (2912), 8476 (Organic Light Emitting Materials and Devices XVIII) 84761T/1-84761T/6 und "Fourfold power efficiency improvement in organic light-emitting devices using an embedded nanocomposite scattering layer" in Organic Electronics (2012), 13(6), 1073-1080 beschreiben Chang, Chih-Hao et al. TiO₂ Partikel als Streuzentren in einem transparenten Photoresist unter dem ITO Kontakt. Unterschiedlich große Partikel erfüllten unterschiedliche Funktionen: Während TiO₂-Partikel mit einem Durchmesser von 250 nm Streuung verursachten und die Licht-Reflexion zurück in die ITO-Schicht verringerten, erhöhte eine steigenden Menge an TiO₂-Teilchen mit einem Durchmesser von 25 nm den Brechungsindex der Photoresist-Schicht.

Von Hong-Wei Chang et al. in "Nano-particle based scattering layers for optical efficiency enhancement of organic light-emitting diodes and organic solar cells", J. Appl. Physics (2913), 113(20), 204502/1 bis 204502/8 und in "OLEDs integrated with internal scattering structure for enhancing optical out-coupling", From Digest of Technical Papers - Society for Information Display International Symposium (2010), 41 (Bk. 1), 50-53) wurden dagegen nur eine Größe an TiO₂ Partikeln (240 nm) in einem transparenten Polymer verwendet, um die Auskopplung von Licht aus TL/BD-OLEDs mit einer ITO-Anode zu verbessern.

Gemäß US 2013/0082244 A1 können hohle, mit Luft oder Gas gefüllte "Objekte" innerhalb einer oder mehrerer organischer Schichten innerhalb des OLED als Streuzentren dienen.

US 2012/0305966 A1 offenbart die Aufbringung einer transparenten, lichtstreuenden Schicht, die u.a. aus Oxiden, darunter SiO₂ und/oder TiO₂, aber auch aus organischen Materialien gebildet sein kann. Diese wird durch eine Schicht aus einem Metalllegierung als Maske überschichtet und sodann strukturiert. Die Ätzmaske kann danach mit Säure entfernt werden, ohne dass die lichtstreuende Schicht angegriffen wird. Auf die lichtstreuende Schicht kann eine Planarisierungsschicht aufgebracht werden.

In US 2012/0234460 A1 wird vorgeschlagen, auf periodische Strukturen, die sich auf einem transparenten Substrat befinden oder integral in diesem ausgebildet sind, lichtstreuende Nanopartikel und auf beides eine Planarisierungsschicht mit höherem Brechungsindex aufzubringen. Alternativ können sich die lichtstreuenden Nanopartikel in der Planarisierungsschicht befinden. Die Planarisierungsschicht besteht aus einem organischen, gehärteten Material; als Nanopartikel kommen Siliciumdioxid-Partikel mit verschiedenen Durchmessern, Titandioxid-Partikel oder eine Kombination aus beidem zum Einsatz. Die Planarisierungsschicht kann dann an eine Lichtaustrittsfläche einer OLED angebunden werden.

Die in DE 10 2011 086 168 A1 offenbarten OLEDs enthalten eine optische Streuschicht entweder auf einer der transparenten Elektrode abgewandten Seite eines Substrats oder einer Abdeckschicht oder zwischen der transparenten Elektrode und dem Substrat bzw. der Abdeckschicht. Im ersteren Fall handelt es sich bei der Streuschicht um ein normalbrechendes Material aus einem organischen Polymer, in das oxidische Streupartikel, u.a. aus Titanoxid oder Siliziumoxid, oder Poren eingearbeitet sind. Im letzteren Fall hat die Streuschicht einen wesentlich höheren Brechungsindex. Zur Erhöhung des Brechungsindex des Matrixmaterials kann dieses ein Additiv, z.B. ein Metalloxid wie TiO₂, enthalten, das in Form von Partikeln mit einer Größe < 50 nm vorliegt; die Streuschicht kann auch ein Sol-Gel-Material mit einem Brechungsindex von > 1,8 oder ein anorganisches Material mit einem Brechungsindex von > 1,8 enthalten. Die Streupartikel können in einer Größe von 200 nm bis 5000 nm vorliegen. Sie können einen höheren Brechungsidex als das *Matrixmaterial aufweisen, wie es für Titandioxid und Zirkoniumdioxid der Fall ist, oder aber einen niedrigeren, was durch Siliziumdioxid-Partikel oder Poren realisiert werden kann.

Yan Gu et al. beschreiben in "Light extraction enhancement in organic light-emitting diodes based on localized surface plasmon and light scattering double-effect", J. Mater. Chem. C, 2013, 1, 4319 Pt₃Co Nanopartikel. Au Gitter können als Streuelemente auch auf der ITO-Schicht an der Grenze zum OLED Funktionsmaterial eingesetzt werden, siehe Julian Hauss et al., "Metallic Bragg-gratings for light management in organic light-emitting devices", Applied Physics Letters (2011), 99(10), 103303/1-103303/3. Von Feng Liu und Jean-Michel Nunzi werden in "Enhanced organic light emitting diode and solar cell performances using silver nano-clusters Ag", Organic Electronics 13 (2012) 1623-1632 Nanopartikel als Streuzentren vor dem Al-Rückkontakt der OLED beschrieben.

Gemäß US 2012/0256218 A1 erfolgt die Lichtemission über eine kombinierten Streu- und Verkapslungsschicht auf dem OLED-Material, die aus anorganischen und anorganischen Schichten bestehen kann, von denen jede ein transparentes oxidisches Streumaterial aufweist, ausgewählt unter Titan-, Zirkonium-, Cer- und Tantaloxid sowie deren Gemischen. Dieses Material sollte einen Durchmesser von > Al8 der emittierten Lichtwellenlänge A besitzen, d.h. bei sichtbarem Licht einen solchen zwischen 100 nm und 500 nm. Die von Chang et al. in "Bi-directional organic light-emitting diodes with nanoparticle-enhanced light outcoupling" From Laser & Photonics Reviews (2013), 7(6), 1079-1087.) diskutierte OLED emittiert beidseitig, wobei auch eine Streuschicht unter dem ITO die beidseitige Emission verbessert.

US2013/082244A1 beschreibt die Verwendung hohler SiO₂-Partikel als Streuzentren direkt in den OLED Funktionsschichten.

In "Solution-processible corrugated structure and scattering layer for enhanced light extraction from organic light-emitting diodes", einem Artikel von Hyun, Woo Jin et al. in Journal of Information Display (2012), 13(4), 151-157, wird eine anorganische Si0₂-Beschichtungslösung beschrieben, der pyrogene TiO₂-Partikel (P25) als hochbrechende Streuzentren zugesetzt werden. Die Glättung der resultierenden Strukturen erfolgt durch mehrmalige Beschichtung mit einem SiO₂-Sol. In WO 2012/017183 findet sich ein ähnliches Konzept; dort werden Streuzentren in einer Einbettungsschicht aus einem glasartigen Binder durch Poren, ggf. teilweise auch durch mineralische Partikel realisiert, wobei die Partikel aus einer ganzen Reihe von Oxiden ausgewählt sein können, darunter Siliciumdioxid und Titandioxid.

US 2008/0020860 A1 beschreibt eine lichtstreuende Schicht, die aus einer transparenten Matrix mit einem organischen Harz sowie zwei darin gleichmäßig dispergierten Partikelsorten besteht. Die erste Partikelsorte kann aus SiO₂ bestehen; sie besitzt einen Brechungsindex im Bereich von 1,4 bis 1,7, und die Teilchen haben einen Durchmesser zwischen 1 und 50 µm. Die zweite Art von Teilchen besitzt einen Brechungsindex von 2,0 bzw. 2,8; es kann sich dabei um Titandioxidteilchen handeln, und die durchschnittliche Größe dieser Teilchen liegt im Bereich zwischen 0,01 und 1 µm. US 2008/0043403 A1 beschreibt eine lichtstreuende Schicht mit einer ähnlichen Zusammensetzung. In beiden Druckschriften wird ein Matrixsystem eingesetzt, in welchem die beiden Partikel-Arten gleichmäßig dispergiert vorliegen.

Eine spezielle Art der Einarbeitung anorganischer Partikel in eine organische Matrix findet sich bei Chih-Ming Chang et al., Macromol. Mater. Eng. 291, 1521-1528 (2006). Die Autoren entwickelten lösliche Polyimid-Titandioxid-Hybridfilme, in denen die Titandioxid-Teilchen über ein Silan-Kupplungsmittel kovalent an die organische Polyimid-Matrix angebunden waren.

Der Einsatz einer organischen Matrix lässt eine Wärmehärtung der Schicht nicht zu. Nachteilig ist weiterhin, dass das Arbeiten mit einer organischen Matrix die Bereitstellung eines Vorläufermaterials erfordert, in welchem sich die Partikel gleichmäßig dispergieren lassen. Dieses Material muss anschließend verfestigt werden, ohne dass zwischenzeitlich eine Entmischung, z.B. durch ein Absinken der schwereren Teilchen, auftritt.

In EP 2 613 374 A1 wird vorgeschlagen, zwei unterschiedliche Teilchensorten mit unterschiedlichen Brechungsindices einzusetzen, wobei sich eine der Teilchensorten in einer auf einem Glassubstrat befindlichen Schicht befindet, während sich die andere Teilchensorte in einer Planarisierungsschicht befindet.

Die Erfinder der vorliegenden Erfindung haben sich die Aufgabe gestellt, eine lichtstreuende Schicht oder ein lichtstreuendes Schichtsystem bereitzustellen, die/das (a) hinsichtlich der Aufbringbarkeit auf eine Vielzahl von Substraten sehr variabel ist, so dass sie/es in Kombination mit den verschiedensten lichtemittierenden oder lichtabsorbierenden Systemen oder Konstrukten verwendet werden kann, (b) mechanisch stabil und (c) auf nasschemischem Wege aufbringbar ist. In einer Reihe von Ausführungsformen soll diese Schicht / dieses Schichtsystem ausschließlich aus anorganischen Komponenten aufgebaut sein oder zumindest keine rein organischen Komponenten aufweisen und ggf. zu ihrer/seiner Herstellung keinen organischen Vernetzungsschritt benötigen. Diese Schicht und dieses Schichtsystem soll so gestaltet sein, dass es sich als Komponente in eine Vielzahl von optisch wirksamen Strukturen, insbesondere optisch wirksame (Dünn-)Schichtsysteme, inkorporieren lässt.

Die Aufgabe wird gelöst durch die Bereitstellung einer Schicht auf einem Substrat mit den folgenden Komponenten:
- einer ersten Art von anorganischen Partikeln mit einem Durchmesser im Bereich von 100 nm bis 1,2 µm, und
- einer zweiten Art von Partikeln mit einem Durchmesser im Bereich von 2 bis 25 nm, bei denen es sich um oxidische Partikel handelt, erhalten durch hydrolytische Kondensation einer gelösten Vorstufe,
wobei eine der beiden Partikel-Arten einen Brechungsindex aufweist, der sich bei einer definierten Wellenlänge, vorzugsweise der Wellenlänge der He-Spektrallinie (0,5865 µm), um mindestens 0,17, vorzugsweise um mindestens 0,25 und besonders bevorzugt um mindestens 1,0 vom Brechungsindex der anderen Partikel unterscheidet,
wobei die Schicht ausschließlich oder fast ausschließlich aus rein anorganischem Material besteht.

Der Verzicht auf organische Komponenten in dieser Schicht hat den Vorteil, dass die Schicht/das Schichtsystem hochgradig und vorzugsweise zumindest bis über die Erweichungstemperatur des Substrats hinaus wärmestabil ist, die für Gläser beispielsweise bei ca. 500 oder 600°C liegen kann. Dies ist unter anderem für die Weiterverarbeitung der Schichten, z.B. im Zusammenhang mit der Herstellung von Abdeckungen von LEDs oder OLEDs, günstig.

Vorzugsweise handelt es sich bei der Schicht um eine durch Wärmeeinwirkung gehärtete Schicht.

Die Partikel müssen nicht notwendigerweise monodispers vorliegen. Bei den vorliegend angegebenen Durchmessern handelt es sich daher ggf. um das jeweilige Maximum einer Größenverteilung, die mit Rasterelektronenmikroskopie bzw. dynamischer Lichtstreuung bestimmt wurde.

Werden nachfolgend Werte für Brechungsindices ohne Referenz auf eine definierte Wellenlänge angegeben, so handelt es sich vorzugsweise immer um solche Werte bei der Wellenlänge der He-Spektrallinie (0,5865 µm).

Es ist besonders günstig, wenn die erste Art von Partikeln den niedrigeren, die zweite Art von Partikeln den höheren Brechungsindex aufweist. Weitere besondere Ausführungsformen des Schichtsystems aus Substrat und der oben definierten Schicht sind in den Unteransprüchen angegeben.

Die Partikel der ersten Art, also die größeren Teilchen, können Teilchen aus einem beliebigen anorganischen Material sein. Vorzugsweise bestehen sie teilweise oder vollständig aus einem (reinen) Oxid, einem Mischoxid oder einem Gemisch mehrerer Oxide. In einer besonders bevorzugten Ausführungsform handelt es sich bei der ersten Art von Partikeln um SiO₂-Partikel. Deren Brechungsindex n beträgt 1,544. Der bevorzugte Größenbereich dieser Teilchen liegt bei 150-800 nm.

Wenn es sich bei diesen Partikeln um SiO₂-Partikel handelt, können diese z.B. sogenannte "Stöber"-Partikel sein, d.h. Partikel, die ausgehend von Alkoxysilanen oder dergleichen durch behutsame hydrolytische Kondensation und damit unter kontrolliertem Wachstum erzeugt werden, siehe Werner Stöber und Arthur Fink, J. of Colloic and Interface Science 26, 62-69 (1962). Diese Partikel sind nahezu monodispers und besitzen Partikeldurchmesser meist im Bereich von etwa 150 nm bis 800 nm, oft zwischen 400 und 650 nm. Dispersionen, die diese Partikel enthalten, sind in Abhängigkeit von der Partikelgröße und der Konzentration stark lichtstreuend.

In einer weniger bevorzugten, alternativen Ausführungsform der Erfindung besitzt die erste Art von Partikeln den höheren Brechungsindex. In dieser Ausführungsform kann die erste Art von Partikeln z.B. ausgewählt sein unter TiO₂, Al₂O₃, ZrO₂, BeO, MgO, Y₂O₃ und ZnO. Darunter sind TiO₂-Partikel bevorzugt, und hierunter nochmals besonders bevorzugt solche in der Rutil-Modifikation. Weitere Alternativen sind Teilchen mit einem im Innern beliebigen Material, deren Außen"haut" (d.h. der äußerste, mindestens ca. 4-10 nm dicke Bereich) aus einem der vorgenannten oxidischen Materialien besteht. Vorzugsweise liegen diese Teilchen in einer relativ engen oder sogar sehr engen Größenverteilung vor, oder sie sind sogar monodispers (z.B. mit einer Größenverteilung, deren Maximum zwischen 150 und 800 nm, vorzugsweise zwischen 400 und 650 nm liegt).

Die Partikel der zweiten Partikel-Art bestehen aus einem (reinen) Oxid, einem Mischoxid oder einem Gemisch mehrerer Oxide. Deren Oberfläche kann bei Bedarf modifiziert sein, beispielsweise durch die Belegung mit organischen Gruppen, die zum Beispiel durch eine Modifizierung dieser Oberfläche mit Silanen bewirkt worden sein kann. Für eine solche Modifizierung geeignete Silane sind unter anderem Alkoxysilane, die ggf. über Kohlenstoff an das Silicium gebundene Reste (ggf. substituierte Alkyl- oder Arylgruppen, organisch polymerisierbare Gruppen und dergleichen) aufweisen können.

Wenn die erste Art von Partikeln den niedrigeren Brechungsindex besitzt, können die Partikel der zweiten Art insbesondere ausgewählt sein unter TiO₂, Al₂O₃, ZrO₂, BeO, MgO, Y₂O₃ und ZnO. Ganz besonders bevorzugt hierunter ist TiO₂, insbesondere in der Rutil-Modifikation.

Die Kombination von SiO₂-Partikeln mit TiO₂-Partikeln ist besonders bevorzugt, noch stärker bevorzugt ist es dabei, dass die SiO₂-Partikel zur ersten Art von Partikeln zu rechnen sind.

Die durch hydrolytische Kondensation erhaltenen oxidischen Teilchen in einem Größenbereich von 2-25 nm können auf bekannte Weise mit Hilfe der Sol-Gel-Technik erzeugt werden. Insbesondere können Verbindungen, vor allem Hydroxide oder Alkoxide, von zwei-, drei-, vier- oder fünfwertigen Ionen der Hauptgruppen des Periodensystems und der Übergangsmetalle eingesetzt werden, die sich durch Hydrolyse und Kondensation unter Ausbildung von Metall-Sauerstoff-Bindungen in Oxide überführen lassen, z.B. hydrolysierbare Metallverbindungen des Magnesiums, des Calciums, von Bor, Aluminium, Germanium, Zinn, Titan oder Zirkonium oder Mischungen davon. Die (formal) in drei- und/oder vierwertigem Zustand befindlichen (Halb-)Metall-lonen sind hierbei bevorzugt, und ganz besonders bevorzugt ist eine hydrolysierbare Verbindung des Titans. Soweit die Kationen Komplexverbindungen ausbilden, können statt der Hydroxide oder Alkoxide (Übergangs-)Metallverbindungen eingesetzt werden. Diese enthalten komplexierende Liganden/Anionen, die mindestens eine Gruppe aufweisen, die eine stabile Komplexbildung ermöglicht. Bei dieser kann es sich um eine Alkoholatgruppe handeln; bevorzugt sind häufig auch Carboxylatgruppen. Die Liganden/Anionen können gegebenenfalls mehrzähnig (chelatbildend) sein und z.B. weitere Oxo- oder Ketogruppen enthalten. Die komplexierenden Gruppen müssen nicht notwendigerweise ionisch an das Metallatom binden; sie können auch Atome oder Reste mit freien Elektronenpaaren aufweisen, die über dieses freie Elektronenpaar mehrzähnig binden wie beispielsweise Diketone mit Ketogruppen in 1,3-Stellung zueinander. Das komplexbildende Molekül kann neben einer solchen Gruppe eine oder mehrere weitere Gruppen enthalten, die eine Chelatbildung überhaupt erst oder eine solche mit mehr als zwei Zähnen ermöglicht. Ein wichtiger Chelatligand ist Acetylaceton (2,4-Pentandion).

In einer besonders bevorzugten Ausführungsform der Erfindung, in der die über eine hydrolytische Kondensation herzustellenden Teilchen TiO₂-Teilchen sind, werden diese aus einem Titanalkoholat durch dessen Umsetzung mit einer oder mehreren polaren Verbindungen mit komplexierenden, chelatisierenden Eigenschaften, Induzieren einer hydrolytischen Kondensation durch Zugabe von Wasser und ggf. einem Katalysator und Bilden eines Sols aus dem Produkt der hydrolytischen Kondensation hergestellt. Diese Herstellung ist detailliert in WO 00/20337 A1 beschrieben und umfasst die Bildung einer löslichen, pulverförmigen Zwischenstufe, aus der das Sol erzeugt werden kann; diese Zwischenstufe ist in P. Löbmann, J. of Sol-Gel Science and Technology 33, 275-282 (2005) näher beschrieben. Es handelt sich dabei um amorphes Material.

Wenn die erste Art der Partikel aus dem höherbrechenden Material gebildet ist, können die Partikel der zweiten Art aus Siliciumdioxid bestehen. Dieses kann beispielsweise durch sauer (z.B. mit HNO₃) katalysierte hydrolytische Kondensation von Tetraalkoxiden hergestellt werden. Eine alternative Route beschreibt die WO 03/027015 A1: Hier werden die Teilchen durch hydrolytische Polykondensation eines Tetraalkoxysilans in einem basischen, wässrigen, einen Alkohol enthaltenden Lösungsmittel hergestellt. Allerdings ist die vorliegende Erfindung nicht auf diese Herstellungsweise und/oder auf reine Siliciumdioxide beschränkt. Denn es eignen sich beliebige oxidische Teilchen für die Zwecke der Erfindung, unabhängig von den verwendeten Kationen. So können Metalloxide aus beliebigen Alkoxiden, darunter Silantetraalkoxiden, oder aus sonstigen hydroxygruppenhaltigen und/oder hydrolysierbaren, kondensierbaren Metallverbindungen oder Silanen, die frei sind von über Kohlenstoff an das Silicium gebundenen Gruppen, erhalten werden. Als Lösungsmittel dient meist ein Alkohol wie Ethanol, oder ein Gemisch solcher Alkohole.

Die Partikel der zweiten Art haben bevorzugt einen Durchmesser im Bereich von 2 bis 10 nm.

Als "gelöste Vorstufe" wird erfindungsgemäß sowohl die als Ausgangsmaterial eingesetzte Metall- oder Siliciumverbindung selbst als auch deren teilweise oder vollständig hydrolytisch kondensierte Form verstanden. Demnach liegt die "gelöste Vorstufe" als Lösung, als Sol oder als Gel vor. Als Lösungsmittel können Wasser und/oder verschiedenen Alkohole wie z.B. Methanol, Ethanol oder Polyethylenglycole eingesetzt werden.

Die lichtstreuende Wirkung der Schicht ist durch Wahl der Partikelgröße der größeren Teilchen (z.B. Stöber-Teilchen) und die Menge des Bindermaterials (der kleineren Teilchen) relativ zu den größeren Teilchen über einen weiten Bereich gezielt einstellbar. Besonders vorteilhaft bei dieser Variante ist die Verwendung löslicher TiO₂-Vorstufenpulver wie in WO 00/20337 A1 und bei Löbmann, a.a.O., beschrieben, die mit SiO₂-"Stöber"-Solen zu stabilen Dispersionen führen.

Die erfindungsgemäße Schicht wird vorzugsweise dadurch hergestellt, dass in einem ersten Schritt eine Suspension, ein Gel oder ein Sol, das die Partikel der ersten Art bereits ausgebildet oder in Form einer (gelösten oder ungelösten) Vorstufe sowie eine gelöste Vorstufe der Partikel der zweiten Art enthält, auf das Substrat aufgebracht wird, beispielsweise durch Tauchbeschichten, Aufschleudern, Rakeln oder Aufsprühen. In manchen Ausführungsformen der Erfindung ist es dabei günstig, einen organischen Stabilisator oder Binder, beispielsweise ein inertes Material mit bei Raumtemperatur pastöser Konsistenz, zuzusetzen, um die physikalischen Eigenschaften der späteren Schicht zu verbessern, z.B. um spätere, mögliche Rissbildungen zu vermeiden. Statt des Aufbringens einer einzigen Suspension, die bereits alle erforderlichen Komponenten enthält, können die Komponenten aber auch getrennt aufgebracht werden, indem zuerst die größeren Partikel und dann erst die Lösung, das Sol oder das Gel mit der Vorstufe der kleineren Partikel aufgetragen wird. Eine Tauchbeschichtung kann insbesondere mit Ziehraten zwischen 5 und 100 cm/min erfolgen. In allen Fällen wird die aufgebrachte Schicht getrocknet. Die Tauchbeschichtung kann bei Raumtemperatur erfolgen, die Trocknung unter Umgebungsatmosphäre (Luft) und entweder ebenfalls bei Raumtemperatur oder bei erhöhter Temperatur. Hierfür sind in der Regel nur wenige Minuten erforderlich. Der Vorgang des Tauchbeschichtens kann nach dem Trocknen einmal oder mehrmals wiederholt werden, um die Schichtdicke zu erhöhen. Bevorzugt nach jedem Schichtauftrag, spätestens aber dann, wenn genügend Material auf dem Substrat abgelagert ist, sollte die Schicht zum Aushärten und damit zum mechanischen Stabilisieren einer Temperaturbehandlung von mindestens 400°C, vorzugsweise von etwa 450°C unterworfen werden. Diese Behandlung wird in der Regel für 5 bis 30 min angewendet. Dabei werden eventuell vorhandene organische Komponenten wie Lösungsmittel, Stabilisatoren und/oder Bindemittel vollständig oder zumindest weitestgehend entfernt. Dementspechend besteht die Schicht aus den beiden Partikel-Arten in der Regel ausschließlich oder fast ausschließlich (d.h. zu mehr als 95 Gew.-%, bevorzugt mindestens 97 Gew.-% und fast immer zu mindestens 99 Gew.-%) aus rein anorganischem Material.

In einer spezifischen Ausführungsform wird das Substrat vor dem Auftrag der erfindungsgemäß notwendigen Komponenten mit einer meist nur relativ geringen Menge der zweiten Art der Partikel vorpräpariert. Diese Ausführungsform hat den Vorteil, dass die Schicht nach der Wärmebehandlung eine bessere Haftung am Substrat zeigt, weil die größeren Teilchen besser an den kleineren Partikeln auf der Oberfläche des Substrats haften als am Substrat selbst.

Die Partikel der ersten Art sind, wie oben erwähnt, beispielsweise über den Stöber-Prozess erhältlich, der deshalb besonders günstig ist, weil die erhaltenen Teilchen nahezu monodispers sind. Dispersionen von Partikel mit Partikeldurchmessern zwischen 150 nm und 800 nm sind in Abhängigkeit von der Partikelgröße und Konzentration stark lichtstreuend. Dabei steigt die Fähigkeit zur Lichtstreuung mit steigender Partikelgröße. Durch die Verwendung von monodispersen oder annähernd monodispersen Materialien, wie sie beim Stöber-Prozess anfallen, können die optischen Eigenschaften durch die Wahl der Partikelgröße und der Konzentration auf die gewünschten Werte eingestellt werden. Auch wenn die Partikel auf ein geeignetes Substrat, beispielsweise auf ein Glassubstrat, aufgebracht werden, lassen sich demnach stark streuende Schichten erhalten; diese sind aber wegen der schwachen Wechselwirkung untereinander und mit dem Substrat mechanisch völlig instabil. Die Instabilität ist so groß, dass sich das Material der Schichten bereits bei Berührung direkt vom Substrat ablöst. Die Erfinder haben deshalb versucht, die Zwischenräume zwischen den Partikeln mit einem Sol deutlich geringerer Teilchengröße (ca. 2-25 nm) zu infiltrieren. In der Tat konnten sie damit eine mechanische Stabilisierung erreichen. Dabei mussten sie jedoch feststellen, dass dann, wenn für dieses Sol ein Material derselben chemischen Zusammensetzung verwendet wird wie für die Partikel der ersten Art, die Streuwirkung wegen des geringer werdenden Brechzahlkontrastes im Rahmen einer solchen Infiltration und Einebnung stark abnimmt. Sie kamen jedoch zu dem Ergebnis, dass dieser Effekt dann nicht eintritt, wenn die Materialien der beiden unterschiedlich großen Teilchenarten so gewählt werden, dass sie eine deutliche Brechzahldifferenz wie oben als notwendig bzw. bevorzugt genannt aufweisen. Es lassen sich Streuwerte, gemessen mit UV-Vis-Spektrometrie, von bis zu ca. 98% bei 550 nm erreichen.

Gleichzeitig besitzen die resultierenden Schichten eine überraschend hohe mechanische Stabilität. Sie überstehen 20-100 Hübe im Crockmetertest nach EN ISO 105-X12 ohne Schädigung.

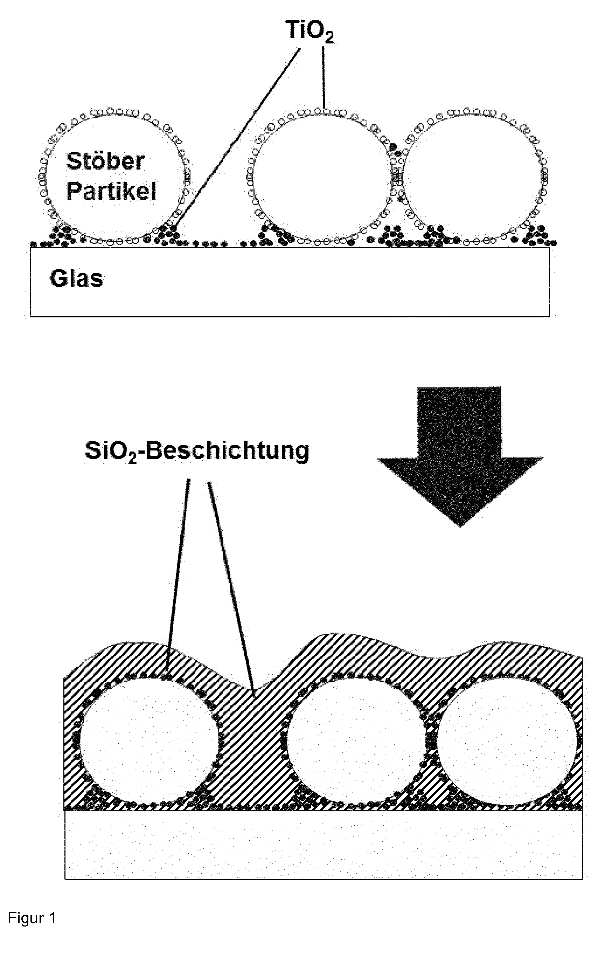

Die matrixfreien Schichten der vorliegenden Erfindung besitzen eine völlig andere Verteilung der Teilchen, verglichen mit der Anordnung derartiger Teilchen in einer Matrix. Die zu beobachtenden Brechungs- und Streuphänomene der unterschiedlichen Konfigurationen weichen deutlich voneinander ab. In einer Matrix liegen die Teilchen statistisch verteilt und getrennt durch das Matrixmaterial nebeneinander, weshalb der Brechungsindex des Matrixmaterials die Streufähigkeit der Schicht wesentlich beeinflusst. Erfindungsgemäß ordnen sich die kleineren Teilchen dagegen um die großen herum an, wie in Figur 1 schematisch dargestellt. Mit der erfindungsgemäßen Anordnung lassen sich Streuwerte ("haze") erzielen, die bei über 85% und bei mehrmaligem Auftrag der erfindungsgemäßen Schichten übereinander sogar bei ca. 98% liegen.

Die ausschließlich aus den beiden Arten von Partikeln gebildeten Schichten sind relativ rau: Sie können eine RMS-Rauigkeit, ermittelt mit einem 3D Laser-Scanning-Microscope Keyence VK-X200K, von etwa 150 nm haben. In einer bevorzugten Ausgestaltung der Erfindung, die mit allen vorgenannten Ausführungsformen kombinierbar ist, wird diese Rauigkeit durch die Anwesenheit einer zusätzlichen Planarisierungsschicht verringert. Durch die Planarisierung wird eine möglichst gute (glatte oder leicht gewellte) Basis für die weitere Prozessierung bei der Herstellung der optisch wirksamen Strukturen geboten, was beispielsweise dann von Vorteil sein kann, wenn sich Vakuumschritte (Aufsputtern einer TCO-Schicht wie von AZO oder Si) anschließen sollen. Durch die Einebnung büßt die Schicht ihre Streuwirkung nur in geringem Umfang ein. Auch werden die thermischen Eigenschaften des Schichtsystems, insbesondere dessen Stabilität gegenüber höheren Temperaturen (z.B. von ca. 500-600°C), durch die Planarisierung nochmals verbessert.

In einer ersten Ausführungsform dieser Ausgestaltung besteht die Planarisierungsschicht aus rein anorganischem, insbesondere oxidischem Material. Hierfür kann sie in Form einer Lösung oder eines Sols oder Gels aufgebracht werden, aus dem sich oxidische Teilchen in einem Größenbereich von 2-25 nm bilden lassen wie oben für die Partikel der zweiten Art angegeben und das aus den entsprechenden Materialien gebildet sein kann, die für deren Herstellung oben genannt sind. Beispielsweise kann ein Sol verwendet werden, das auf bekannte Weise mit Hilfe der Sol-Gel-Technik aus einem hydrolytisch kondensierbaren Silan oder einer hydrolytisch kondensierbaren Titanverbindung oder einem solchen Komplex erzeugt wurde. Für die Planarisierungsschicht können je nach Bedarf höher oder niedriger lichtbrechende Materialien verwendet werden; auch eine Mischung aus verschiedenen Materialien, die ggf. unterschiedliche Brechungsindices haben, ist möglich, beispielsweise eine Mischung aus SiO₂ und TiO₂. Dadurch lässt sich die effektive Brechzahl des erhaltenen Schichtsystems einstellen, beispielsweise, um im Falle der Anwendung des erfindungsgemäßen Schichtsystems in Kombination mit einem Bauteil wie einer Solarzelle, LED oder OLED den Brechzahlkontrast zwischen der Planarisierungsschicht und einer TCO-Schicht des Bauteils zu senken. Hierdurch wird nämlich die Reflexion an der Grenzfläche von Planarisierungsschicht und TCO verringert, wodurch die Lichteinkopplung im Falle einer Solarzelle bzw. die Lichtauskopplung im Falle von LEDs oder OLEDs erhöht wird. Idealerweise sollte dabei die Brechzahl der Planarisierungschicht identisch mit der der TCO-Schicht sein oder dieser möglichst nahekommen. Diese liegt in der Regel bei mindestens 1,6, vorzugsweise bei mindestens 1,7 und idealerweise bei oder nahe 1,8.

Der Fachmann kennt die Beziehung der Volumenanteile der verschiedenen Mischkomponenten zur Einstellung der effektiven Brechzahl, die allerdings nicht linear ist, siehe die sog. Effektiv-Medium-Theorien zur Berechnung der effektiven Brechzahl, insbesondere die nach Bruggeman (auch bezeichnet als "effective medium approximation"). Die Einebnung der Partikelschicht wird dabei umso größer, je mehr Planarisierungsschichten aufgebracht werden. Durch die Planarisierung entsteht dabei, je nach der Anzahl der aufgebrachten Schichten, eine glatte oder leicht gewellte Oberfläche, die als Basis für weitere Schritte bei der Herstellung des optischen Elements (Aufsputtern einer AZO-oder Si-Schicht oder dgl.) genutzt werden kann. Von weiterem Vorteil ist der Einsatz einer oder mehrerer Planarisierungsschichten auch deshalb, weil sie die thermischen Eigenschaften des Schichtsystems verbessert/verbessern. Dies kann von Vorteil sein, wenn die erfindungsgemäße Schicht bzw. das erfindungsgemäße Schichtsystem in eine optisch wirksame Struktur eingebunden werden soll, die bei höheren Temperaturen prozessiert werden muss.

In einer zweiten Ausführungsform dieser Ausgestaltung wird die Planarisierungsschicht aus oder unter Verwendung eines anorganisch-organischen Hybridpolymers gebildet. Die Planarisierung kann hierbei wegen der Erzielbarkeit höherer Einfachschichtdicken in vielen Fällen einfacher und wirkungsvoller erfolgen als in einem rein anorganischen System.

Als typische Vertreter für anorganisch-organische Hybridpolymere sind ORMOCER®e (eingetragene Marke der Fraunhofer Gesellschaft zur Förderung der angewandten Forschung e.V., München) zu nennen. Solche Hybridpolymere sind unter anderem in K.-H. Haas, Advanced Engineering Materials 2(9), 571-582 (2000) und K.-H. Haas, S. Amberg-Schwab und Klaus Rose, Thin Solid Films 351, 198-203 (1999) beschrieben. Die Materialien basieren auf organisch modifizierten, hydrolytisch kondensierbaren Silanen, insbesondere Alkoxysilanen, und/oder elementorganischen Verbindungen. Siliciumorganische Ormocere®, die neben Silicium keine Metallkationen aufweisen, haben Brechungsindices, die in der Regel im Bereich von n = 1,57 - 1,59 (bei 589 nm) liegen.

Die organisch modifizierten, hydrolytisch kondensierbaren Silane lassen sich durch die Formel R¹ₐR²_{b}SiX₄-ₐ-_{b} beschreiben, worin der Rest R¹ ein über Kohlenstoff an das Silicium gebundener, unsubstituierter oder substituierter Kohlenwasserstoffrest ist, der einer organischen Polymerisations- oder Additionsreaktion zugänglich ist, der Rest R² ein über Kohlenstoff an das Silicium gebundener, unsubstituierter oder substituierte Kohlenwasserstoffrest ist, der einer organischen Polymerisations- oder Additionsreaktion nicht zugänglich ist, X eine Gruppe, die unter hydrolytischen Bedingungen zu einer Kondensationsreaktion unter Ausbildung von Si-O-Si-Brücken führt, oder OH ist, a 0, 1, 2 oder 3 ist, b 0, 1, 2 oder 3 ist und x 1, 2, 3 oder 4 ist. Der Rest R¹ wird als (organischer) Netzwerkbildner bezeichnet, da er zum Aufbau eines zusätzlichen organischen Netzwerks beitragen kann; es kann sich dabei beispielsweise um geradkettige, verzweigte oder einen Ring enthaltende organische Gruppen mit mindestens einer nichtaromatischen C=C-Doppelbindung handeln, vorzugsweise einer solchen, die einer Michael-Reaktion zugänglich ist. R¹ kann beispielsweise eine Acrylat-, Methacrylat-, Vinyl- oder Allylgruppe aufweisen oder daraus bestehen. Das Kohlenstoffskelett dieses Restes kann durchgehend sein oder durch Heteroatome oder Gruppen wie O, S, NH, NHCO, CONHCO, COO oder NHCOO unterbrochen sein. R² ist häufig eine ggf. substituierte Alkyl- oder Arylgruppe, kann aber auch einen anderen chemischen Aufbau haben, sofern die Anbindung an das Silicium über ein Kohlenstoffatom erfolgt; diese Gruppe beeinflusst durch ihre Anwesenheit bzw. die Anzahl b, in der sie an das Siliciumatom gebunden ist, mechanische und andere Eigenschaften des entstehenden Netzwerks; sie wird daher als Netzwerkwandler bezeichnet. Die Gruppe X wird als anorganischer Netzwerkbildner bezeichnet; je nach ihrer Anzahl entstehen kleinere oder größere Polysiloxan-Oligomere, -Ketten oder dreidimensionale Netzwerke. Der Fachmann kennt die entsprechenden Gruppen; sie werden meist ausgewählt unter Halogeniden wie Cl, Wasserstoff, Hydroxy, Alkoxy, Acyloxy, Alkylcarbonyl, Alkoxycarbonyl oder NR"₂ mit R" gleich Wasserstoff, Alkyl oder Aryl, ohne darauf beschränkt zu sein. Häufig und meist sehr günstig ist die Wahl einer Alkoxygruppe wie Methoxy oder Ethoxy.

Als elementorganische Verbindungen eignen sich insbesondere Verbindungen der Formel M^{x}Xₓ, worin M ausgewählt ist unter Aluminium, Bor und drei- (x = 3) oder vierwertigen (x = 4) Übergangsmetallen, wobei X ein Alkoxid oder ein Komplexligand ist, ohne dass die Metallverbindungen auf diese Gruppe beschränkt wären.

Mit Hilfe gezielter Hydrolyse- und Kondensationsreaktionen derartiger Edukte lassen sich Polymermaterialien herstellen, die auf einem anorganischen Netzwerk aufbauen, das je nach Vorhandensein von Silicium und/oder anderen Metallen der elementorganischen Verbindungen Si-O-Si-, Si-O-M- und/oder M-O-M-Verknüpfungen aufweist. Dieses lässt sich, sofern es Siliciumatome enthält, als organisch modifiziertes Kieselsäurepolykondensat oder Siloxan, im Falle des Vorhandenseins weiterer metallischer Kationen als organisch modifiziertes Kieselsäure(hetero)polykondensat beschreiben. Durch die Wahl der organischen Substituenten der Edukte, die wie oben beschrieben als Netzwerkwandler und/oder Netzwerkbildner fungieren können, lassen sich (durch die Netzwerkwandler) die mechanischen Eigenschaften beeinflussen und (durch die Netzwerkbildner) zusätzliche organische Verknüpfungen in das Hybridpolymer einbauen. Sind Netzwerkbildner vorhanden, kann das ORMOCER®-Material nach der Applikation organisch polymerisiert/vernetzt und damit ausgehärtet werden (z. B. über organische Additions- oder Polymerisationsreaktionen). Dabei können die organisch vernetzbaren Gruppen je nach Art dieser Gruppen auf übliche Weise polymerisiert werden, insbesondere thermisch oder photochemisch. Hierfür typischerweise einsetzbare Photostarter sind IRGACURE® 369, Lucirin TPO oder Lucirin TPO-L (BASF). Die thermische Härtung kann mit oder ohne die Hilfe von thermischen Startern wie z.B. AIBN (Azo-bis-(isobutyronitril)) oder Peroxiden, in Anwesenheit von solchen Startern bei deren jeweiliger Zersetzungstemperatur und im Übrigen in günstiger Weise bei Temperaturen zwischen 140 und 180°C, erfolgen. Werden thermische Starter eingesetzt, werden sie typischerweise in einer Menge von 1 bis 5 Gew.-%, bezogen auf das anorganisch-organische Hybridmaterial, eingesetzt.

Aufgrund der Vielzahl an variablen Gruppen in den organischen und auch anorganischen Bestandteilen können vielfältige Hybridpolymere mit zahlreichen unterschiedlichen Eigenschaften, wie z. B. Viskosität, Brechzahl oder auch mechanischer Stabilität, hergestellt werden.

Den Planarisierungsschichten aus einem anorganisch-organischen Hybridpolymer können zusätzlich brechzahlverändernde und/oder streuende Partikel zugesetzt werden. Bei diesen Partikeln handelt es sich vorzugsweise um anorganische Nanopartikel, deren Oberfläche gegebenenfalls mit organischen Gruppen modifiziert sein kann. Der Zusatz solcher Partikel zu der oder den Planarisierungsschicht(en) lässt sich in besonderer Weise nutzen, um einen hohen Grad an Variabilität bezüglich der optischen und mechanischen Eigenschaften zu erreichen. Daraus ergeben sich zahlreiche mögliche Anwendungen der ausgehärteten Materialien z. B. als Photoresiste, Schutzschichten, Funktionsmaterialien oder zur Planarisierung anderer Oberflächen.

Brechzahlsteigernd wirken dabei Partikel, deren Material einen Brechungsindex besitzt, der höher ist als der Brechungsindex der Matrix. Günstig hierfür sind in der Regel dieselben Materialien, die oben als Material mit der höheren Brechzahl angegeben sind, darunter insbesondere TiO₂ und ZrO₂. Eine weitere Eigenschaft sollte hinzutreten, damit Partikel brechzahlsteigernd wirken können: sie sollten relativ klein sein und dabei vorzugsweise einen Durchmesser von < 40 nm, vorzugsweise von < 30 nm aufweisen. Außerdem können die Partikel isoliert in der Matrix vorliegen, müssen dies aber nicht notwendigerweise. Unter "isoliert" ist dabei zu verstehen, dass ihre Oberfläche nicht mit einem Material modifiziert ist, das (ggf. ionisch, vor allem aber kovalent) in die Matrix eingebunden ist. Das schließt natürlich nicht aus, dass diese Teilchen dennoch oberflächenmodifiziert sind; nur ist eine derartige Oberflächenmodifikation dann nicht zu einer Einbindung in die Matrix geeignet. Eine Modifikation der Oberfläche, die eine Einbindung in die Matrix nicht ermöglicht, ist häufig dann günstig, wenn eine Agglomeration der Teilchen verhindert werden soll, weil diese in agglomeriertem Zustand das Licht streuen, aber nicht mehr zu einer Brechzahländerung, insbesondere Brechzahlsteigerung beitragen. Als Modifikation der Oberfläche in diesem Sinne kommt die Funktionalisierung über eine Kondensationsreaktion, beispielsweise mit einem organisch modifizierten Silan in Frage, beispielsweise nach der Vorschrift von S. Zhou et al., Langmuir 2007, 23, 9178-9187. Streuend wirken Teilchen mit relativ großen Durchmessern (vorzugsweise >80 nm, stärker bevorzugt >100 nm). Diese können ebenfalls oberflächenmodifiziert vorliegen, beispielsweise um stabilere Partikel-Dispersionen im für die Einarbeitung genutzten organischen Lösungsmittel und letztendlich in der Matrix zu erzeugen. Im Falle der streuenden Teilchen kann die Oberflächenmodifikation aber auch genutzt werden, um die Teilchen in die Matrix einzubinden. Dies gelingt beispielsweise dann, wenn als Matrix ein organisch modifiziertes (Hetero-)Kieselsäurepolykondensat mit organisch polymerisierbaren Gruppen eingesetzt wird und die Teilchen mit einem Silan modifiziert werden, das dieselben oder chemisch verwandte organisch polymerisierbare Gruppen trägt, so dass bei einer organischen Vernetzung der Matrix die Teilchen in die Matrix stabil einpolymerisiert werden. Ein Beispiel für eine organisch polymerisierbare Gruppe ist die (Meth-)Acrylatgruppe, mit der sowohl die Kieselsäure(hetero)polykondensat- bzw. Siloxan-Matrix als auch die Oberfläche der zugesetzten Teilchen modifiziert sein kann.

Das Substrat für die erfindungsgemäßen Schichten und Schichtsysteme wird je nach Bedarf ausgewählt; es kann ein anorganisches oder ein organisches Substrat sein, das in der Regel transparent für sichtbares Licht sein sollte. Beispiele für anorganische Substrate sind Gläser wie Borofloat, Kalk-Natronglas, Optiwhite (mit und ohne Sperrschicht), Eagle XG, Kieselglas und weitere Materialien, die Temperaturen von bis zu 500°C unbeschadet überstehen.

Das lichtstreuende Schichtsystem der Erfindung lässt sich bevorzugt unter Verwendung der nachfolgenden Schritte erzeugen:
(a) Bereitstellen der ersten Art von anorganischen Partikeln mit einem Durchmesser im Bereich von 100 nm bis 1,2 µm in Form einer Dispersion,
(b) Bereitstellen eines Materials, das hydrolytisch kondensierbare oder hydrolytisch teilkondensierte Vorstufen eines Oxids aufweist,
(c) Vermischen der Dispersion gemäß (a) und des Materials gemäß (b),
(d) Aufbringen einer Schicht aus der mit dem Material gemäß (b) vermischten Dispersion gemäß (a) auf dem Substrat,
(e) Trocknen der in Schritt (d) erzeugten Schicht,
(f) Erhitzen der gemäß (e) getrockneten Schicht auf über 400°C
(g) Abkühlen der Schicht.

Wenn das lichtstreuende Schichtsystem zusätzlich eine Planarisierungsschicht aufweisen soll, folgen die nachstehenden Schritte:
(h) Erzeugen eines Sols, das mindestens eine hydrolytisch kondensierbare oder teilkondensierte Metallverbindung, die sich in ein Oxid überführen lässt, und/oder eine Hydroxygruppen tragende und/oder hydrolytisch kondensierbare oder teilkondensierte Siliciumverbindung aufweist, wobei die Siliciumverbindung keine, eine oder mehrere über Kohlenstoff an das Silicium gebundenen Gruppen trägt,
(i) Auftragen des Sols in Form einer Schicht auf die Schicht gemäß (g),
(j) Trocknen der gemäß (i) erzeugten Schicht,
(k) Bei Bedarf Erhitzen der gemäß (j) getrockneten Schicht auf eine Temperatur, bei der sich das Sol in ein Oxid oder ein organisch modifiziertes Kieselsäure(hetero)-polykondensat umwandelt, und
(I) Abkühlen des Schichtsystems,
die gegebenenfalls mehrfach wiederholt werden können.

Wenn das gemäß Schritt (h) zu erzeugende Sol eine Hydroxygruppen tragende und/oder hydrolytisch kondensierbare oder teilkondensierte Siliciumverbindung aufweist, die eine oder mehrere über Kohlenstoff an das Silicium gebundene, organisch polymerisierbare Gruppen trägt, können diese Gruppen durch das Erhitzen gemäß Schritt (k), vorzugsweise auf eine Temperatur zwischen 120 und 200°C, stärker bevorzugt zwischen 140 und 180°C und/oder zuvor oder danach photochemisch, insbesondere durch UV-Bestrahlung, gegebenenfalls in Gegenwart eines zugesetzten Photoinitiators, organisch polymerisiert werden.

Die erfindungsgemäßen Schichten und Schichtsysteme lassen sich als Komponente einer Vielzahl von optisch wirksamen Strukturen, insbesondere von Dünnschichtsystemen, einsetzen. Hierbei können sie als Substrate genutzt werden, auf denen weitere Schichten aufgebracht werden, oder sie können als Abschluss eines solchen Aufbaus dienen, derart, dass das Substrat, auf dem sie aufgebracht wurden, nach außen weist. Besonders hervorgehoben sei hierbei die Verwendung in (Dünnschicht-)Solarzellen (insbesondere zur verbesserten Lichteinkopplung), die Verwendung in LEDs oder OLEDs (insbesondere zur verbesserten Lichtauskopplung) und die Verwendung zum "Lichtmanagement" von Architekturglaselementen, also zur Führung des Lichts in vorgeplanter Weise, die auf die Wahrnehmung eines Betrachters zugeschnitten ist, derart, dass dieser das Licht beispielsweise als angenehm, besonders hell/tageslichtähnlich oder anheimelnd empfindet.

Die Erfindung bietet unter anderem die folgenden Vorteile:
- eine kostengünstige großflächige Abscheidung optisch funktionaler (Streu-)Schichten;
- die Steuerung der optischen Eigenschaften über weite Bereiche
- die Möglichkeit zur Herstellung planarisierter Streuschichten, die für die zuverlässige Abscheidung und den Betrieb von optischen Schichten benötigt wird, darunter z.B. TCO-(TCO = transparent conducting oxide), AZO- oder ITO-Schichten
- die Vermeidung der Notwendigkeit, den Vakuumprozess des AZO-Sputterns und der Si-Absorberdeposition bei Solarzellen durch eine nasschemische Aufrauhung durch Ätzen des AZO bei Atmosphärendruck unterbrechen zu müssen
- die Möglichkeit der Bereitstellung thermisch stabiler, weil ausschließlich anorganischer Streuschichten.

Nachstehend soll die Erfindung anhand von Ausführungsbeispielen und Vergleichsbeispielen näher erläutert werden.

Die Lichtstreuung der nachstehenden Schichtsysteme wurde mit Hilfe des folgenden Messverfahrens ermittelt: UV-Vis Spektroskopie; Messgerät: Shimadzu UV-3100: Vorgehen: Transmission: Geschlossene Ulbrichtkugel; gestreute Transmission: Ulbrichtkugel auf Rückseite offen; Haze: 100 x gT/T, worin gT die gestreute Transmission und T die totale oder Gesamttransmission bedeuten.

Die Rauigkeit der Schichtsysteme wurde mit dem 3D Laser-Scanning-Microscope Keyence VK-X200K bestimmt.

### A. Herstellung der Beschichtungssole und Lacke

### A1. Herstellung eines "Stöber-Sols"

SiO₂ Partikel werden nach der von Werner Stöber und Arthur Fink in J. of Colloid and Interface Science 26, 62-69 (1968) angegebenen Methode bzw. nach der modifizierten Route von G. H. Bogush et al in "Preparation of Monodisperse Silica Particles: Control of Size and Mass" in Journal of Non-Crystalline Solids 104 (1988) 95-106 aus 6364g Ethanol, 750g Wasser, 680g 25% NH₃ und 416,6g TEOS in einem 10l Reaktionsgefäß hergestellt. Nach 12-stündigem Rühren werden mittels Rotationsverdampfer ca. 9l Ethanol durch Destillation bei reduziertem Druck entfernt. Durch wiederholte Zugabe trockenen Ethanols und Abrotieren wird der Wassergehalt der Reaktionsmischung auf unter 0,5 Gew.-% gesenkt. Die Lösung wird mit Ethanol auf eine SiO₂ Feststoffgehalt von ca. 8 Gew.-% (ca. 1500 g Stöber-Sol) verdünnt, anschließend erfolgt eine Filtration durch einen 15-19 µm Faltenfilter. Die erhaltenen Teilchen haben einen Durchmesser von ca. 520 nm.

### A2. Herstellung eines SiO₂-Sols unter Anwendung saurer Katalyse

Ein SiO₂-Sol wurde durch Vermischen von 240 g TEOS (Tetraethoxysilan), 41,36 g 0,5 M HNO₃ und 120 g Ethanol und anschließendes 24-stündiges Rühren hergestellt. Das gebildete Sol wurde mit 400 g Ethanol verdünnt.

### A3. Herstellung eines Sols aus Stöber-Partikeln und TiO₂-Partikeln

Zu 608,7 g Stöber-Sol wie in Beispiel 1 beschrieben wurden 0,0487 g Polyethylenimin als Stabilisator und 70 g eines "TiO₂-Vorstufenpulvers", hergestellt nach der von P. Löbmann in J. of Sol-Gel Science and Technology 300, 275-282 (2005) beschriebenen Methode, gegeben, und die Mischung wurde 24 Stunden lang gerührt. Nach Zugabe von 56 g Polyethylenglycol PEG 200 wurde das Sol durch einen Faltenfilter mit der Maschengröße 15-19 µm filtriert.

### A4. Herstellung ungefüllter organisch modifizierter Kieselsäurepolykondensate

### A4-1.

p-Vinylphenyltrimethoxysilan und Dimethoxydiphenylsilan wurden im molaren Verhältnis von 1:2 vorgelegt und unter Zugabe von 0,5 N Salzsäure in einem molaren Verhältnis von Wasser zu Alkoxysilanen von 1,1:1 zur Reaktion gebracht. Über einen Reaktionszeitraum von 24 h bei 80°C erfolgten anschließend Hydrolyse- und Kondensationsreaktionen. Das Reaktionsgemisch wurde in Ethylacetat aufgenommen und anschließend mit je 200 ml Wasser bis zur Neutralisation gewaschen. Nach Filtration durch einen hydrophoben Filter wurde das Endprodukt durch destillative Entfernung der flüchtigen Bestandteile erhalten.

### A4-2.

0.80 mol (177 g) Diphenylsilandiol wurden in 141 g Toluol als Lösungsmittel mit 0.80 mol (179 g) of Styryltrimethoxysilan zusammengegeben. Unter Stickstoff wurde mit Bariumhydroxid-Monohydrat bei 50°C als Katalysator eine hydrolytische Kondensation durchgeführt. Nach Abkühlung auf Raumtemperatur wurde die Mischung durch einen Membranfilter mit einer Porengröße von 0,2 µm filtriert. Anschließend wurde das Toluol und das bei der Kondensationsreaktion entstandene Methanol im Vakuum entfernt.

### A5. Herstellung eines gefüllten organisch modifizierten Kieselsäurepolykondensats

Dem Produkt des Herstellungsbeispiels A4-2. wurde eine Dispersion eines Sols aus Zirkoniumdioxid-Teilchen in Methylethylketon zugegeben, wobei die Oberflächen der Zirkoniumdioxid-Teilchen mit Vinylphenylgruppen oberflächenmodifiziert waren. Die Herstellung des modifizierten Zirkoniumdioxid-Sols ist in EP1 544 257 B1 beschrieben.

### B. Herstellung und Eigenschaften beschichteter Substrate

### B1. Herstellung einer Schicht aus "Stöber"-Partikeln

Mit dem "Stöber-Sol" aus Herstellungsbeispiel A1. wurden Borosilicatgläser mit den Maßen 10 cm x 10 cm x 3,3 mm, die zuvor unter Verwendung von Neodisher A8 bei 93°C spülmaschinengereinigt worden waren, mit einer Ziehgeschwindigkeit von 50 cm/min tauchbeschichtet und anschließend ca. 1 min an der Luft getrocknet. Mit einem Teil der Gläser wurde die Tauchbeschichtung mit denselben Ziehraten bis zu 4 mal wiederholt. Mit der Zahl der Beschichtungsvorgänge stieg die Schichtdicke (linear) und damit der Haze. Bei einer Wellenlänge von 550nm betrug der Haze einer Schicht 30%, bei fünf Schichten waren es 53%. Anschließend wurden die Gläser im auf 450°C erhitzten Muffelofen 10 min lang ausgeheizt und anschließend aus dem Ofen genommen und unter Umgebungsbedingungen abkühlen gelassen.

Trotz Härtung lösten sich die Schichten bei manueller Beanspruchung sofort vom Substrat.

### B2. Herstellung eines Schichtsystems aus unterschiedlich großen SiO₂-Partikeln.

Die unter B1. beschriebenen, mit Stöber-Partikeln beschichteten Gläser wurden mit dem verdünnten Sol des Herstellungsbeispiels A2. bei Ziehgeschwindigkeiten von 50 cm/min tauchbeschichtet und anschließend an der Luft getrocknet. Anschließend wurden die Gläser im auf 550°C erhitzten Muffelofen 10 min lang ausgeheizt und anschließend aus dem Ofen genommen und auf Umgebungstemperatur abkühlen gelassen. Dieser Beschichtungs-Härtungszyklus kann mehrfach wiederholt werden.

Das Schichtsystem löste sich auch bei 100 Hüben im Crockmetertest nach EN ISO 105-X12 nicht ab und ist damit als "stabil" zu bewerten. Allerdings war die Streuwirkung des Schichtsystems unbefriedigend: Bei einem 5-schichtigen Aufbau gemäß Herstellungsbeispiel B1., der einmal wie unter B2. beschrieben beschichtet wurde, sank der Haze auf 11 %. Wurde nur eine Schicht Stöber-Partikel verwendet, sank er auf 2%. Allgemein lässt sich daraus ableiten: Je weniger "Stöber"-Schichten und/oder je mehr Schichten des Herstellungsbeispiels 2 verwendet werden, umso mehr sinkt der Haze.

### B3. Herstellung erfindungsgemäßer Schichtsysteme

### B3-1.

Das gemäß A3. hergestellte Sol wurde für ca. 10 min einer Beschallung in einem Ultraschallbad unterzogen (Ultraschallbad: Bandelin Sonorex Super RK1028H, HF-Frequenz 35kHz, HF-Leistung 300/600W; die Beschallungsdauer betrug 10 min.) und anschließend eingesetzt, um Borosilicatgläser mit den Maßen 10 cm x 10 cm x 3,3 mm, die zuvor unter Verwendung von Neodisher A8 bei 93°C spülmaschinengereinigt worden waren, mit einer Ziehgeschwindigkeit von 30 cm/min. einer Tauchbeschichtung zu unterwerfen. Die Gläser wurden anschließend ca. 1 min an der Luft getrocknet. Sodann wurden die Gläser im auf 550°C erhitzten Muffelofen 10 min lang ausgeheizt und anschließend aus dem Ofen genommen und auf Umgebungstemperatur abkühlen gelassen.

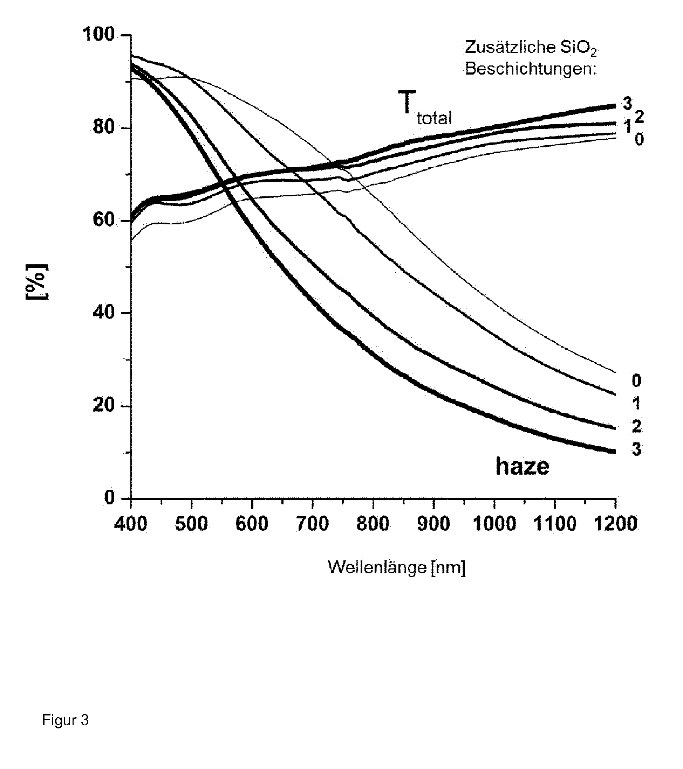

Der Aufbau der entstandenen Schicht ist in **Figur 1** schematisch dargestellt. Durch die Verwendung von hochbrechendem TiO₂ als Material für die Partikel mit kleinerem Durchmesser stieg die Lichtstreuung im Vergleich zum Schichtsystem von B2. stark an. **Figur 3** zeigt ein Diagramm, das die Lichtstreuung verschiedener Schichten bei unterschiedlichen Wellenlängen angibt. Das Schichtsystem B3. ist der Kurve "0" zuzuordnen (ohne zusätzliche SiO₂-Beschichtungen). Daraus lässt sich entnehmen, dass der Wert des Haze bei einer Wellenlänge von 550 nm 87% beträgt. Die Rauigkeit dieser Schicht betrug 156 nm.

### B3-2. und B3-3.

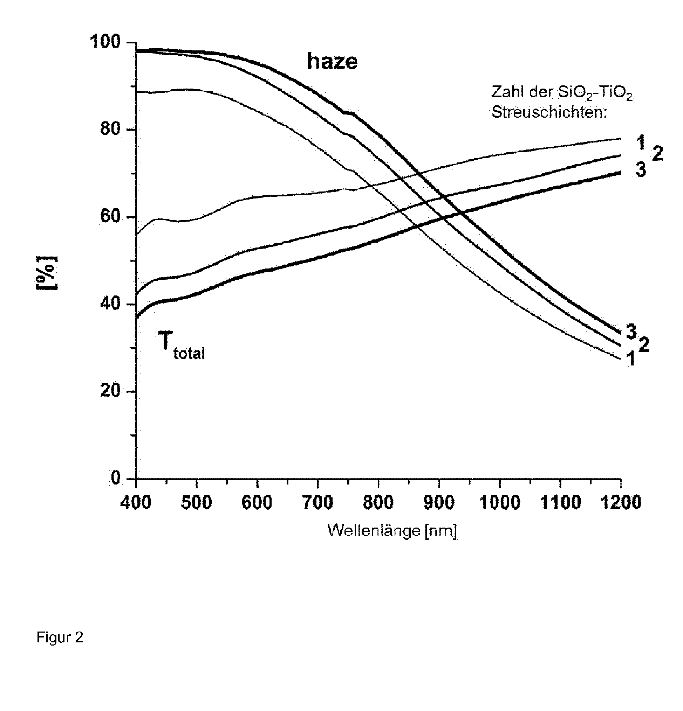

Wie in Beispiel B3-1. beschrieben wurde eine Mischschicht aus großen SiO₂-Partikeln und kleinen TiO₂-Partikeln auf ein Borosilikatglas aufgebracht. Nach dem Trocknen und Härten wurde der Beschichtungsvorgang ein weiteres Mal bzw. zwei weitere Male durchgeführt. Der **Figur 2** lässt sich entnehmen, dass die Streuung durch das Aufbringen vor allem einer zweiten Schicht stark ansteigt; bei einer Wellenlänge von 550 nm steigt der Wert des Haze auf ca. 96%; eine dritte Schicht erhöht ihn nochmals auf ca. 98%.

### B4. Erfindungsgemäße Schichtsysteme mit zusätzlicher, rein anorganischer Planarisierungschicht

### B4-1.

Gläser, die gemäß Beispiel B3-1 beschichtet worden waren, wurden mit Hilfe von Tauchbeschichtung mit einem Sol beschichtet, das gemäß A2. hergestellt war. Die Ziehgeschwindigkeit betrug 6 cm/min. Nach dem Auftrag wurde das beschichtete Glas ca. 1 min an der Luft getrocknet, für 10 min in einen auf 550°C geheizten Muffelofen verbracht und anschließend auf Umgebungstemperatur abkühlen gelassen. Die Schichtdicke der Planarisierungsschicht lag bei ca. 100 nm. Wie aus **Figur 2** ersichtlich, nahm die Fähigkeit des Schichtsystems, Licht zu streuen, durch das Aufbringen der Planarisierungsschicht bei 550 nm nur wenig, nämlich um ca. 4%, ab.

### B4-2. und B4-3.

Wie in Beispiel B4-1. beschrieben, wurden Gläser, die gemäß Beispiel B3-1 beschichtet worden waren, mit einem Sol gemäß A2. tauchbeschichtet. Nach dem Trocknen und Härten wurde der Beschichtungsvorgang ein weiteres Mal bzw. zwei weitere Male durchgeführt; die Beschichtungen hatten jeweils eine Dicke von ca. 100 nm. Der **Figur 2** lässt sich entnehmen, dass die Streuung bei 550 nm durch das Aufbringen der zusätzlichen zweiten Schicht auf ca. 75%, durch das Aufbringen einer weiteren, dritten Schicht auf ca. 71 % sinkt. Die Rauigkeit des Schichtsystems mit zweifacher Planarisierungsschicht betrug 116 nm, die des Schichtsystems mit dreifacher Planarisierungsschicht betrug 95 nm. Mit zunehmender Anzahl der Planarisierungsschichten sank der Haze des Schichtsystems. Dieser Effekt lässt sich beseitigen, wenn die Planarisierungsschicht aus einem hochbrechenden Material gewählt wird, beispielsweise aus TiO₂. Die mechanische Stabilität des Schichtsystems nahm mit zunehmender Anzahl der Planarisierungsschichten zu.

### B5. Erfindungsgemäße Schichtsysteme mit zusätzlicher anorganisch-organischer Planarisierungschicht (Hybridschicht aus organisch modifiziertem Kieselsäurepolykondensat)

### B5-1.

Gläser, die gemäß Beispiel B3-1 beschichtet worden waren, wurden mittels Schleuderauftrag mit einem Lack beschichtet, der gemäß A4-2 hergestellt war. Die Schichtdicke des Lacks betrug vor dem Trocknen 2-3 µm. Nach dem Trocknen wurde eine Rauigkeit von 1 nm gemessen.

### B5-2.

Der gemäß Herstellungsbeispiel A5 hergestellte Lack wurde zur Planarisierung von Gläsern eingesetzt, die gemäß Beispiel B3-1. beschichtet worden waren. Nach dem Auftrag wurde der Lack entweder thermisch oder lichtinduziert ausgehärtet. Die thermische Härtung erfolgte dabei ohne zusätzlichen Starter bei Temperaturen von 140 - 180°C. Für die lichtinduzierte Härtung wurde der Lack zunächst mit Lucirin TPO (2,4,6-trimethylbenzoyl diphenylphosphine oxide) (hergestellt von BASF) versetzt. Nach dem Beschichten wurden die aufgetragenen Schichten dann lichtinduziert ausgehärtet und mit Hilfe von Wärme bei 120-150°C thermisch nachgehärtet. Nach dem Härten wurde jeweils eine Rauigkeit von < 10 nm gemessen.

## Patentansprüche

1. Lichtstreuendes Schichtsystem, umfassend ein Substrat sowie eine auf dem Substrat befindliche Schicht, die zu mehr als 95 Gew.-% aus anorganischem Material besteht und die folgenden Komponenten aufweist:
- eine erste Art von anorganischen Partikeln mit einem Durchmesser im Bereich von 100 nm bis 1,2 µm,
- eine zweite Art von Partikeln mit einem Durchmesser im Bereich von 2 bis 25 nm, bei denen es sich um oxidische Partikel handelt, erhalten durch hydrolytische Kondensation einer gelösten Vorstufe,
wobei eine der beiden Partikel-Arten einen Brechungsindex aufweist, der sich bei einer definierten Wellenlänge um mindestens 0,17, vorzugsweise um mindestens 0,25 und besonders bevorzugt um mindestens 1,0 vom Brechungsindex der anderen Art bei derselben Wellenlänge unterscheidet.

2. Lichtstreuendes Schichtsystem nach Anspruch 1, worin die erste Art von Partikeln einen niedrigeren Brechungsindex aufweist als die zweite Art.

3. Lichtstreuendes Schichtsystem nach Anspruch 1 oder 2, worin die Partikel mit dem niedrigeren Brechungsindex aus SiO₂ bestehen und die Partikel mit dem höheren Brechungsindex aus einem Material bestehen, ausgewählt unter Oxiden und Mischoxiden des Titans, Aluminium, Zirkoniums, Berylliums, Magnesium, Yttriums und Zinks, vorzugsweise aus Titandioxid in der Rutil-Modifikation.

4. Lichtstreuendes Schichtsystem nach einem der voranstehenden Ansprüche, worin die erste Art von anorganischen Partikeln einen Durchmesser im Bereich von 150 bis 800 nm besitzt und/oder die zweite Art von anorganischen Partikeln einen Durchmesser im Bereich von 2 bis 10 nm besitzt.

5. Lichtstreuendes Schichtsystem nach einem der voranstehenden Ansprüche, worin die auf dem Substrat befindliche Schicht ausschließlich aus den genannten Partikeln besteht.

6. Lichtstreuendes Schichtsystem nach einem der voranstehenden Ansprüche, weiterhin umfassend eine oder mehrere Planarisierungsschichten, die vorzugsweise ein anorganisches oxidisches Material oder ein anorganisch-organisches Hybridmaterial aufweist/aufweisen oder daraus besteht/bestehen.

7. Lichtstreuendes Schichtsystem nach Anspruch 6, worin das Material der Planarisierungsschicht(en) dasselbe Material ist, aus dem die zweite Art von Partikeln besteht.

8. Lichtstreuendes Schichtsystem nach Anspruch 6, worin das Material der Planarisierungsschicht(en) eine anorganisch-organische Hybridmaterial-Matrix aufweist, in die anorganische, oxidische Partikel eingebettet sind, deren Oberfläche unmodifiziert oder mit organischen Gruppen modifiziert ist, wobei organische Gruppen der anorganisch-organischen Hybridmaterial-Matrix untereinander und/oder mit organischen Gruppen der anorganischen, oxidischen Partikel organisch polymerisiert sein können.

9. Verfahren zum Herstellen eines lichtstreuenden Schichtsystems nach einem der Ansprüche 1 bis 5, umfassend die folgenden Schritte:
(a) Bereitstellen der ersten Art von anorganischen Partikeln mit einem Durchmesser im Bereich von 100 nm bis 1,2 µm in Form einer Dispersion,
(b) Bereitstellen eines Materials, das hydrolytisch kondensierbare oder hydrolytisch teilkondensierte Vorstufen eines Oxids aufweist,
(c) Vermischen der Dispersion gemäß (a) und des Materials gemäß (b),
(d) Aufbringen einer Schicht aus der mit dem Material gemäß (b) vermischten Dispersion gemäß (a) auf dem Substrat,
(e) Trocknen der in Schritt (d) erzeugten Schicht,
(f) Erhitzen der gemäß (e) getrockneten Schicht auf über 400°C
(g) aktives oder passives Abkühlen der Schicht.

10. Verfahren nach Anspruch 9, worin es sich bei der ersten Art von anorganischen Partikeln um SiO₂-Partikel, bevorzugt um monodisperse Partikel handelt, die vorzugsweise in einer ethanolischen Dispersion vorliegen.

11. Verfahren nach Anspruch 9 oder 10, worin die hydrolytisch kondensierbaren oder hydrolytisch teilkondensierten Vorstufen eines Oxids gemäß (b) Titanverbindungen sind, die vorzugsweise durch Umsetzen eines Titanalkoxids mit Acetylacetonat und Hydrolyse mit Wasser erzeugt und durch Entfernen von freiem Lösungsmittel und Wasser in ein im Lösungsmittel der Dispersion lösliches Pulver überführt wurden.

12. Verfahren zum Herstellen eines lichtstreuenden Schichtsystems nach einem der Ansprüche 6 bis 11, umfassend die folgenden Schritte:
(a) Bereitstellen der ersten Art von anorganischen Partikeln mit einem Durchmesser im Bereich von 100 nm bis 1,2 µm in Form einer Dispersion,
(b) Bereitstellen eines Materials, das hydrolytisch kondensierbare oder hydrolytisch teilkondensierte Vorstufen eines Oxids aufweist,
(c) Vermischen der Dispersion gemäß (a) und des Materials gemäß (b),
(d) Aufbringen einer Schicht aus der mit dem Material gemäß (b) vermischten Dispersion gemäß (a) auf dem Substrat,
(e) Trocknen der in Schritt (d) erzeugten Schicht,
(f) Erhitzen der gemäß (e) getrockneten Schicht auf über 400°C,
(g) aktives oder passives Abkühlen der Schicht,
(h) Erzeugen eines Sols, das mindestens eine hydrolytisch kondensierbare oder teilkondensierte Metallverbindung, die sich in ein Oxid überführen lässt, und/oder eine Hydroxygruppen tragende und/oder hydrolytisch kondensierbare oder teilkondensierte Siliciumverbindung aufweist, wobei die Siliciumverbindung keine, eine oder mehrere über Kohlenstoff an das Silicium gebundenen Gruppen trägt, wobei dieses Sol frei ist von zusätzlichen oxidischen Partikel oder zusätzliche oxidische Partikel enthält, deren Oberfläche unmodifiziert ist oder deren Oberfläche mit organisch polymerisierbaren Gruppen modifiziert ist,
(i) Auftragen des Sols in Form einer Schicht auf die Schicht gemäß (g),
(j) Trocknen der gemäß (i) erzeugten Schicht,
(k) bei Bedarf Erhitzen der gemäß (j) getrockneten Schicht auf eine Temperatur, bei der sich das Sol in ein Oxid oder ein organisch modifiziertes Kieselsäure(hetero)-polykondensat umwandelt, und
(l) aktives oder passives Abkühlen des Schichtsystems.

13. Verfahren nach Anspruch 12, worin unter wiederholter Anwendung der Schritte (i) bis (I) eine oder mehrere weitere Schichten auf das gemäß Schritt (I) erhaltene Schichtsystem aufgebracht werden.

14. Verfahren nach Anspruch 12 oder 13, worin das gemäß Schritt (h) zu erzeugende Sol eine Hydroxygruppen tragende und/oder hydrolytisch kondensierbare oder teilkondensierte Siliciumverbindung aufweist, die eine oder mehrere über Kohlenstoff an das Silicium gebundene, organisch polymerisierbare Gruppen trägt und/oder worin dieses Sol zusätzliche oxidische Partikel enthält, deren Oberfläche mit organisch polymerisierbaren Gruppen modifiziert ist, wobei die organisch polymerisierbaren Gruppen durch das Erhitzen gemäß Schritt (k) und/oder zuvor oder danach auf photochemischem Wege organisch polymerisiert werden.

15. Verwendung des lichtstreuenden Schichtsystems nach einem der Ansprüche 1 bis 8 in Solarzellen, LEDs, OLEDs oder Glaselementen, die für bauliche Zwecke eingesetzt werden sollen, oder zur Herstellung der genannten Gegenstände.
